# EUROPÄISCHE PATENTSCHRIFT

(11) **EP 3 513 995 B1**
(45) Veröffentlichungstag und Bekanntmachung des Hinweises auf die Patenterteilung: **26.05.2021**
(21) Anmeldenummer: 18152511.4
(22) Anmeldetag: 19.01.2018
(51) Int. Cl.: B60J 7/06, B60J 7/08

(54) **ROLLPLANENANORDNUNG FÜR EINEN MULDENKÖRPER EINES NUTZFAHRZEUGS**
ROLLER TARPAULIN ARRANGEMENT FOR A RECESS BODY OF A COMMERCIAL VEHICLE
DISPOSITIF FORMANT BÂCHE ROULANTE POUR UN CORPS EN FORME D'AUGE D'UN VÉHICULE UTILITAIRE

(43) Veröffentlichungstag der Anmeldung: 24.07.2019
(73) Patentinhaber: Schmitz Cargobull AG, 48341 Altenberge (DE)
(72) Erfinder: Schubert, Bernd, 99092 Erfurt (DE); Klomfass, Ekhard, 40667 Meerbusch (DE)
(74) Vertreter: Baur & Weber Patentanwälte PartG mbB

(56) Entgegenhaltungen:
- EP-A1- 2 878 551
- EP-A2- 2 377 707
- DE-A1-102006 005 161
- US-A- 2 967 733
- US-A- 3 667 802

## Beschreibung

Die Erfindung betrifft eine Rollplanenanordnung für einen Muldenkörper eines Nutzfahrzeugs, insbesondere eines Muldenkippers oder eines Sattelaufliegers.

Aufgrund gesetzlicher Vorschriften, aber auch zum Schutz der Ladung, ist es bei Muldenkippern oder Sattelaufliegern üblich, während des Transports von Schüttgut einen Muldenkörper abzudecken. Somit kann gewährleistet werden, dass keine Bestandteile der Ladung aus dem Muldenkörper herausfallen können bzw. das Schützgut durchnässt oder anderweitig verunreinigt werden kann. Zur Abdeckung eines Muldenkörpers sind zum einen entlang der Fahrtrichtung verschiebbare Verschiebeverdecke bekannt, die häufig auch motorisch betätigbar sind. Zum anderen werden sogenannte Rollplanen verwendet, die typischerweise vom Fahrer oder der Fahrerin des Nutzfahrzeugs von der einen Längsseite zur gegenüberliegenden Längsseite manuell auf- bzw. abgerollt werden müssen. Derartige Rollplanen stellen eine einfache und kostengünstige Möglichkeit zur Abdeckung eines Muldenkörpers dar.

Aus der WO 2010/010 152 A1 ist eine Vorrichtung zum Abdecken einer Oberfläche einer Fahrzeugkarosserie bekannt. Die Vorrichtung umfasst eine Trommel, die drehbar montiert ist und eine Abdeckung auf- oder abwickeln kann, wobei die Trommel auf einem Längsverschiebungsmechanismus montiert ist, der Schienen aufweist, die auf jeder Seite der Oberfläche vorgesehen sind. Desweiteren ist ein Befestigungssystem für die Abdeckung an einem transversalen Ende der zu bedeckenden Oberfläche vorgesehen, so dass die Translation und die Rotation der Trommel zum Aufwickeln/Abwickeln der Abdeckung über der zu bedeckenden Oberfläche führt. Desweiteren ist ein System zum kontinuierlichen Verriegeln der Längskanten der Abdeckung auf den Schienen vorgesehen, das während des Abwickelvorgangs fortlaufend angebracht wird.

Aus der EP2 377 707 A2 ist eine Abdeckanordnung zur Abdeckung eines Behälters mit einer Grundfläche bekannt, die von Seitenwänden begrenzt ist. Die Abdeckanordnung umfasst eine sich von einer ersten zu einer zweiten Seitenwand erstreckende Welle, mittels welcher eine Abdeckplane aufrollbar bzw. abrollbar ist und die an einem ihrer axialen Enden eine Antriebsvorrichtung umfasst und eine am Behälter befestigte Führungseinrichtung, an welcher die Welle mit ihrem der Antriebsvorrichtung gegenüber liegenden axialen Ende abgestützt ist, wobei die Welle an der Führungseinrichtung unter Verschluss abrollbar ist und wobei an dem an der Führungseinrichtung abgestützten axialen Ende der Welle ein mit der Welle drehfest verbundenes Zahnrad angeordnet ist. Desweiteren ist an dem an der Führungseinrichtung abgestützten Ende der Welle ein vom Zahnrad gesondertes und die Welle an der Führungseinrichtung abstützendes Stützmittel vorgesehen, das entlang der Führungseinrichtung beweglich ist.

Aus der EP 2 377 707 A2 ist eine Abdeckanordnung für Behälter bekannt, bei der eine um eine Achse gewickelte Plane über einen Behälter gespannt werden kann, wobei die Achse an beiden Stirnseiten Zahnkränze umfassen, die zum Antrieb der Achse dienen. Die Achse liegt auf Abrollscheiben auf. Das axiale Spiel wird durch Laufscheiben in einer Umhausung beschränkt.

Aus der US 3,667,802 ist eine motorisierte Planenabdeckung für Anhänger bekannt, bei der eine auf eine Achse aufgewickelte Plane über einen Motor, der mit Fahrradketten zusammenwirkende Zahnkränze antreibt, auf und abgewickelt werden kann. Die Anordnung liegt über die Zahnkränze auf der Fahrradkette auf, wobei das axiale Spiel durch Stirnseitige Federlager beschränkt wird.

Die EP 2 878 551 A1 zeigt eine Vorrichtung zum seitlichen Abdecken/Aufdecken eines Containers mit einer Plane und einer an der Plane befestigten Auf-/Abrollstange. Die Auf-/Abrollstange kann in beiden Richtungen zwischen einer ersten Position, in der die Plane auf die Auf-/Abrollstange aufgerollt ist, und einer Position, in der die Plane abgerollt ist, bewegt werden. Die Vorrichtung umfasst zwei Antriebsschienen, die mit Antriebselementen der Auf-/Abrollstange in Reibkontakt bzw. in Eingriff gebracht werden können, so dass eine Umwandlung der Rotation der Auf-/Abrollstange in eine Rotationsbewegung und eine Translationsbewegung an den Enden der Auf-/Abrollstange ermöglicht wird.

Die DE 10 2006 005161 A1 zeigt ein Verfahren zum Öffnen und Schließen von Rollplanen auf Behältern und eine Vorrichtung zur Durchführung des Verfahrens.

Ausgehend von diesem Stand der Technik hat sich der Erfinder nun die Aufgabe gestellt, bereits bekannte Rollplanenanordnungen weiter zu verbessern und insbesondere die Funktionsfähigkeit während des Betriebs oder des Beladens einer Kippmulde bezüglich eventueller Verwindungen nicht weiter einzuschränken.

Diese Aufgabe wird durch die Merkmale des Patentanspruchs 1 gelöst. Weitere vorteilhafte Ausgestaltungen sind in den Unteransprüchen angegeben. Diese lassen sich in technologisch sinnvoller Weise miteinander kombinieren. Die Beschreibung, insbesondere im Zusammenhang mit der Zeichnung, charakterisiert und spezifiziert die Erfindung zusätzlich.

Gemäß der Erfindung wird eine Rollplanenanordnung für einen Muldenkörper eines Nutzfahrzeugs, insbesondere eines Muldenkippers oder eines Sattelaufliegers, geschaffen, die eine quer zu ihrer Längsrichtung bewegliche Wickelstange zum Auf- und Abrollen einer Rollplane zwischen gegenüberliegenden Längsseiten des Muldenkörpers aufweist, wobei die Wickelstange auf einer Welle eine Wickeleinrichtung zur Aufnahme der Rollplane aufweist, wobei die Welle an einer die Längsseiten verbindenden Stirnseite über die Wickeleinrichtung hinausragt und mit einem Nockenrad versehen ist, das in eine entlang der Stirnseite an dem Muldenkörper angeordnete Führungseinrichtung so kämmend eingreift, dass die Wickelstange entlang der Längsrichtung mit einem Axialspiel geführt ist und das Gewicht der Wickelstange über das Nockenrad auf der Führungseinrichtung ruht. Die Führungseinrichtung weist eine Lochschiene auf, deren Löcher mit Nocken des Nockenrads korrespondieren und entlang der Längsrichtung schlitzförmig ausgeführt sind. Auf der Welle sind zwei Distanzscheiben vorgesehen, die unmittelbar benachbart zum Nockenrad und auf beiden Seiten des Nockenrads angeordnete sind, und die Winkelstange ist beabstandet zum Nockenrad auf der dem stirnseitigen Ende abgewandten Seite mit einer Führungsscheibe versehen.

Demnach wird bei der erfindungsgemäßen Lösung die Welle der Wickelstange anhand der stirnseitigen Führungseinrichtung mit einem axialen Spiel geführt, so dass während des Auf- bzw. Abrollens der Wickelstange eine geringfügige Verschiebung des Nockenrades möglich ist. Dies ist insbesondere dann vorteilhaft, wenn Teile der typischerweise als Schüttgut bereitgestellten Ladung während des Einfüllens in die Führungseinrichtung gelangen, da aufgrund des axialen Spiels das Nockenrad geringfügig ausweichen kann, so dass der Fremdkörper nicht zur Blockade der Wickelstange führen kann. Desweiteren wird beispielsweise bei einem oftmals beobachteten Verwinden der stirnseitigen Bordwand des Muldenkörpers ein gewisser Toleranzausgleich ermöglicht, so dass die erfindungsgemäße Rollplanenanordnung während des Abrollens bzw. Aufrollens der Rollplane nicht mit zusätzlichen Reibungskräften beaufschlagt wird. Da das Gewicht der Rollplanenanordnung durch das Nockenrad getragen wird, sind keine speziellen zusätzlichen Abstützungen nötig, so dass insgesamt eine einfache und kostengünstige, aber dennoch zuverlässige Lösung geschaffen wird, die darüber hinaus auch bei bereits existierenden Nutzfahrzeugen nachrüstbar wäre.

Eine mit dem Nockenrad korrespondierende Lochschiene stellt eine einfache Möglichkeit des kämmenden Eingreifens in die Führungseinrichtung dar, wobei die schlitzförmig ausgeführten Löcher entlang der Längsrichtung für das Axialspiel sorgen.

Gemäß einer weiteren Ausführungsform der Erfindung ist die Wickelstange quer zur Längsrichtung zusätzlich mit einem Radialspiel geführt.

Zusätzlich zum Axialspiel ein Radialspiel der Wickelstange vorzusehen, ermöglicht es, die oben beschriebene Bewegung des Nockenrads in der Führungseinrichtung während der Aufroll- bzw. Abrollbewegung der Rollplane noch weiter zu verbessern, so dass insbesondere eine reibungsarme Überführung von einem geschlossenen in einen geöffneten Zustand an einem Muldenkörper möglich wird.

Gemäß einer weiteren Ausführungsform der Erfindung weist die Führungseinrichtung eine Führungskulisse auf. Dabei kann die Führungskulisse zur Begrenzung des Axialspiels herangezogen werden.

Demnach wird das axiale Spiel der Wickelstange nicht durch das Nockenrad selbst begrenzt, sondern durch Distanzscheiben, die das Nockenrad auf beiden Seiten umgeben. Dies ermöglicht eventuellen Verschleiß am Nockenrad zu minimieren, da die Distanzscheiben wesentlich großflächig ausgestaltet werden können als die kämmenden korrespondierenden Bereiche der Nocken und der längsförmigen Schlitze.

Die Führungsscheibe kann dabei die Wickeleinrichtung abschließen, so dass sie das Auf- bzw. Abrollen der Rollplane mit unterstützt. Zusätzlich zu den Distanzscheiben kann auch die Führungsscheibe einen Anschlag zur Begrenzung des Axialspiels bilden.

Desweiteren kann es gemäß einer weiteren Ausführungsform der Erfindung vorgesehen sein, dass die Führungskulisse zur Begrenzung des Radialspiels dient. Hierbei wird bevorzugt wiederum ein Anschlag für die Welle der Wickelstange zur Begrenzung der radialen Bewegung an der Führungskulisse geschaffen, so dass zum einen das radiale Spiel nicht durch Anschlagen der Nocken des Nockenrades von der Lochschiene weg gerichtet begrenzt werden muss und zum anderen sichergestellt werden kann, dass das Nockenrad in der Führungseinrichtung während der Auf- bzw. Abrollbewegung kämmt.

Besonders vorteilhaft wird die Führungskulisse aus mehrfach gebogenen Blechabschnitten geformt. Dabei kann die Lochschiene ein Teil der Führungskulisse sein.

Die Führungseinrichtung kann sowohl als separates Bauteil mit dem Muldenkörper verbunden werden aber auch wenigstens teilweise direkt in eine Seitenwand des Muldenkörpers integriert sein.

Das dem stirnseitigen Ende gegenüberliegende Ende der Wickelstange kann dabei gemäß einer weiteren Ausführungsform der Erfindung mit einem Betätigungsmittel verbindbar sein, dass das Auf- und Abrollen der Rollplane unterstützt. Hierbei wird insbesondere ein geeignet geformter Hebel verstanden, über den die Wickelstange in eine Drehbewegung versetzt werden kann. Am gegenüberliegenden Ende kann auch am Muldenkörper ein entsprechender Sperrmechanismus vorgesehen sein, der die Wickelstange im auf- bzw. abgerollten Zustand lösbar fixiert.

Bei der Rollplanenanordnung kann ein erster Abstand an einer Basis eines Nockenkleiner oder gleich eines zweiten Abstands eines Durchmessers des Lochs und ein dritter Abstandeiner Abrollstrecke zwischen zwei Nocken größer oder gleich einem vierten Abstand der Löcher zueinander gewählt sein.

Nachfolgend werden einige Ausführungsbeispiele anhand der Zeichnung näher erläutert. Es zeigen:
- Fig. 1: eine perspektivische Ansicht eines Muldenkörpers mit einer erfindungsgemäßen Rollplanenanordnung,
- Fig. 2A bis 2C: ein Detail der Rollplanenanordnung aus Fig. 1,
- Fig. 3: ein weiteres Detail der Rollplanenanordnung aus Fig. 1,
- Fig. 4: die Rollplanenanordnung aus Fig. 1 in einer Draufsicht,
- Fig. 5: die Rollplanenanordnung aus Fig. 4 in einem Querschnitt,
- Fig. 6: ein Detail eines Nockenrads und einer Lochschiene zur Verwendung in einer erfindungsgemäßen Rollplanenanordnung.

In den Figuren sind gleiche oder funktional gleich wirkende Bauteile mit den gleichen Bezugszeichen versehen.

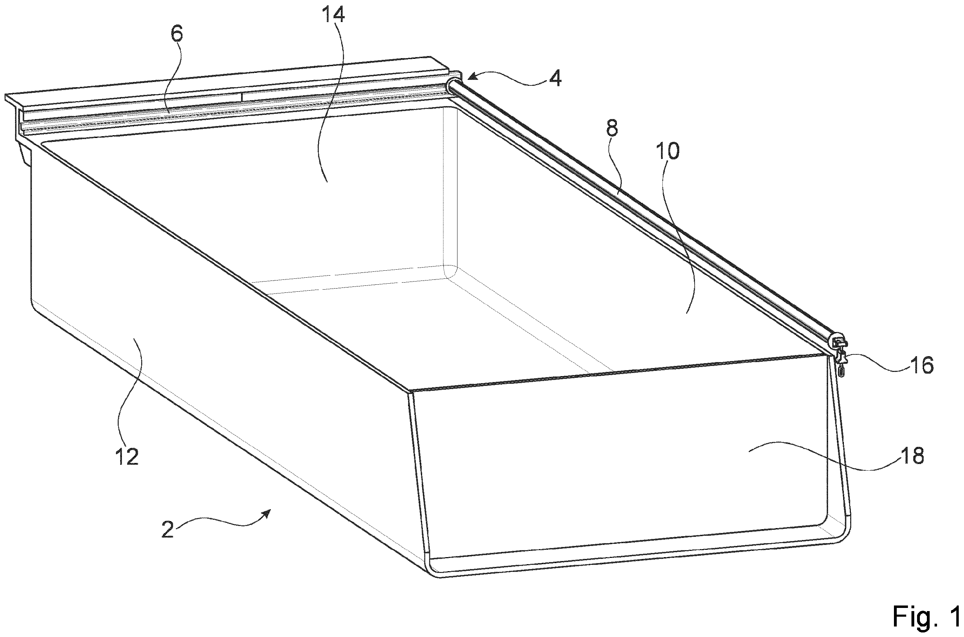

Unter Bezugnahme auf Fig. 1 wird im Folgenden eine erste Ausführungsform einer erfindungsgemäßen Rollplanenanordnung näher beschrieben. In Fig. 1 ist ein als Kippmulde ausgeführter Muldenkörper 2 dargestellt, der auf seiner Oberseite mit der Rollplanenanordnung 4 versehen ist. Die Rollplanenanordnung 4 umfasst eine Führungseinrichtung 6 sowie eine Wickelstange 8, die zum Auf- bzw. Abrollen einer Rollplane zwischen einer ersten Längsseite 10 und einer zweiten Längsseite 12 des Muldenkörpers 2 hin- und herbewegt werden kann. Die Wickelstange 8 wird dabei in der Führungseinrichtung 6 geführt, wobei diese an der Stirnseite 14 des Muldenkörpers 2 angeordnet ist.

An dem gegenüber liegenden Ende der Wickelstange 8 kann ein entsprechendes Betätigungsmittel 16 angeordnet sein, das in Fig. 1 lediglich schematisch in Form eines kardanischen Anschlusses dargestellt ist. Sowohl die erste Längsseite 10 als auch die zweite Längsseite 12 können mit entsprechenden Befestigungen versehen sein, um im Bereich des Betätigungsmittels die Wickelstange 8 entsprechend zu sichern. Auf der der Stirnseite 14 dem Muldenkörper 2 gegenüberliegenden Seite ist diese üblicherweise mit einer klappbaren Bordwand 18 zum Entleeren von Schüttgut im Inneren des Muldenkörpers 2 versehen.

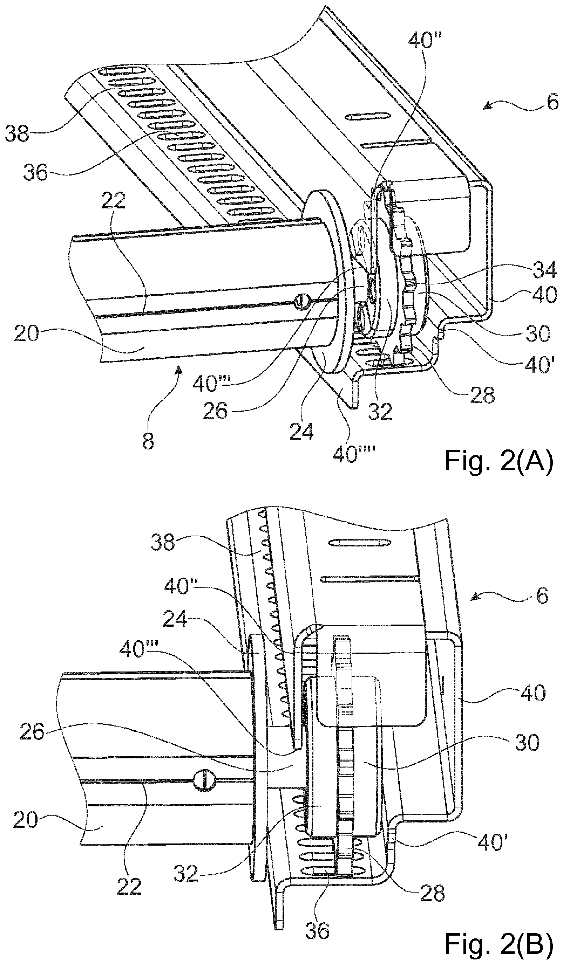

Unter Bezugnahme auf die Fig. 2A bis 2C wird nachfolgend die Rollplanenanordnung 4 näher beschrieben, wobei die Ansichten der Fig. 2A bis 2C den Bereich des Zusammentreffens der Wickelstange 8 und der Führungseinrichtung 6 aus unterschiedlichen Blickrichtungen von der ersten Längsseite 10 her perspektivisch darstellen. Die nachfolgenden Erläuterungen beziehen sich auf Fig. 2A bis 2C.

In Fig. Fig. 2A bis 2C ist zu erkennen, dass die Wickelstange 8 eine Wickeleinrichtung 20 zur Aufnahme einer Rollplane (nicht in Fig. 2A bis 2C dargestellt) aufweist. Die Wickeleinrichtung ist dabei entlang der Längsachse der Wickelstange 8 mit einem Schlitz 22 versehen, in das beispielsweise ein Ende der Rollplane einführbar ist. Die Wickeleinrichtung 20 wird von einer Führungsscheibe 24 abgeschlossen. Zumindest die Wickeleinrichtung 20 ist drehfest mit einer Welle 26 verbunden, die als Bestandteil der Wickelstange 8 über die Führungsscheibe 24 hinausragt und an ihrem Ende mit einem drehfest befestigten Nockenrad 28 versehen ist. Auf beiden Seiten des Nockenrads 28 kann jeweils eine Distanzscheibe vorgesehen sein, wobei die dem axialen Ende der Welle 26 zugeordnete Distanzscheibe nachfolgend erste Distanzscheibe 30 und die der Wickeleinrichtung zugeordnete Distanzscheibe zweite Distanzscheibe 32 bezeichnet wird.

Das Nockenrad 28 weist an seinem Außenrand eine Vielzahl von gleichförmig beabstandeten Nocken 34 auf, die mit entsprechend schlitzförmig geformten Löchern 36 einer Lochschiene 38 kämmen. Der Radius des Nockenrads 28 bzw. die Radien der ersten Distanzscheibe 30 und der zweiten Distanzscheibe 32 sind dabei so gewählt, dass das Gewicht der Wickelstange 8 auf dem Nockenrad 28 liegt, da die erste Distanzscheibe 30 und die zweite Distanzscheibe 32 entlang ihres Außenumfangs die Führungseinrichtung 6 nicht berühren. Folglich gleitet die Wickelstange 8 bei einer Bewegung quer zu ihrer Längsrichtung über das Nockenrad 28 entlang der Lochschiene 38, so dass über die Wickeleinrichtung 20 eine Rollplane auf- bzw. abgewickelt werden kann.

Die Führungseinrichtung 6 kann, wie den Fig. 2A bis 2C zu entnehmen ist, durch ein oder mehrere mehrfach abgewinkelte Blechabschnitte gebildet werden, so dass eine Führungskulisse 40 gebildet wird, die das Axialspiel bzw. das Radialspiel der Wickelstange 8 begrenzen kann.

So ist benachbart zur ersten Distanzscheibe 30 auf der dem Nockenrad 28 abgewandten Seite ein erster Führungskulissen-Abschnitt 40' vorgesehen, der die axiale Bewegung der Wickelstange 8 in Richtung der Stirnseite 14, d. h. in Richtung der Führungseinrichtung 6 begrenzt. In die gegenüberliegende Richtung ist ein zweiter Führungskulissen-Abschnitt 40" vorgesehen, der eine Kontaktfläche zwischen der dem Nockenrad 28 abgewandten Seite der zweiten Distanzscheibe 32 und der Führungseinrichtung 6 herstellt. Oberhalb der Welle 26 ist ein dritter Führungskulissen-Abschnitt 40'" ausgebildet, der das radiale Spiel der Wickelstange 8 so begrenzt, dass das Nockenrad 28 bei einer Radialbewegung immer noch mit der Lochschiene 38 und den dazu gehörigen Schlitzen 36 kämmt.

Alternativ oder zusätzlich kann auch die Führungsscheibe 24 beispielsweise im zweiten Führungskulissen-Abschnitt 40" oder in einem vierten Führungskulissen-Abschnitt 40"" für eine axiale Spielbegrenzung sorgen.

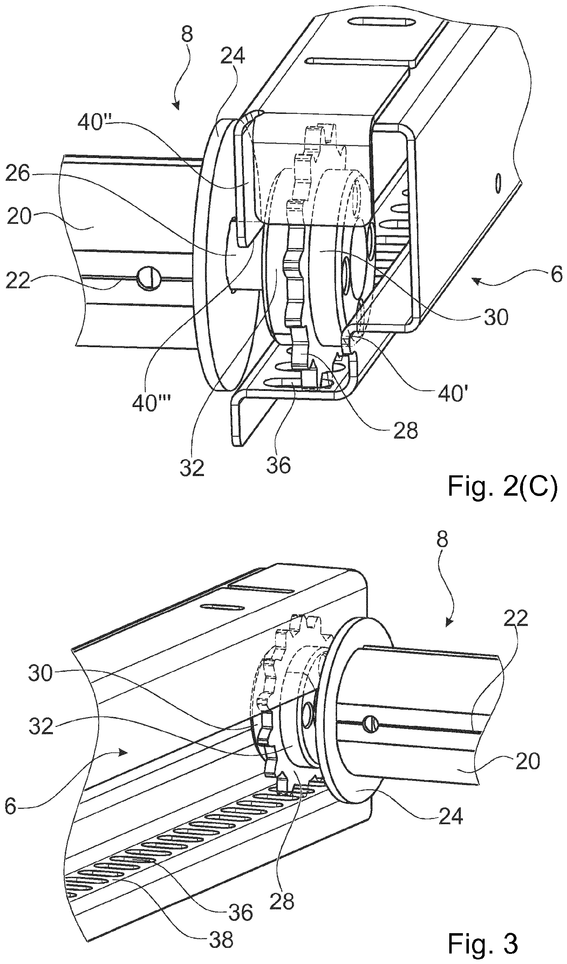

In Fig. 3 ist die Rollplanenanordnung 4 nochmals in einer perspektivischen Seitenansicht gezeigt, die gegenüberliegend zu der Fig. 2C gewählt ist. Man erkennt, dass keine der beiden Distanzscheiben 30 und 32 für eine Abstützung des Gewichts der Wickelstange 8 sorgt, so dass die Wickelstange 8 beim Auf- bzw. Abrollen spielbehaftet über das Nockenrad 28 in der Führungseinrichtung 6 geführt wird.

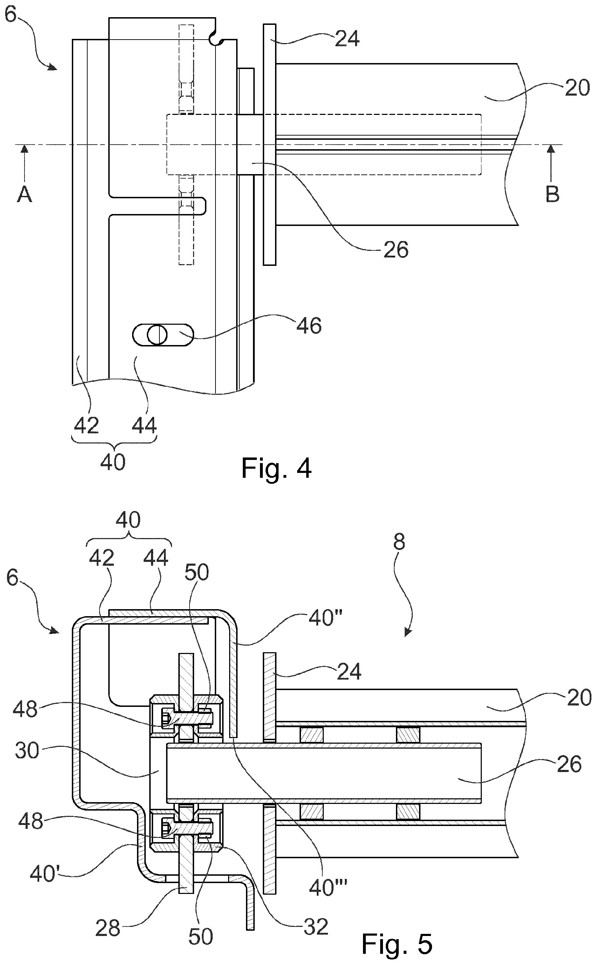

Die Rollplanenanordnung 4 wird unter Bezugnahme auf Fig. 4 nochmals in einer Draufsicht gezeigt, wobei hier zu erkennen ist, dass die Führungseinrichtung 6 aus zwei separaten Blechabschnitten 42 und 44 hergestellt ist, die zusammen die Führungskulisse 40 bilden. Über Langlöcher 46 kann eine Anpassung des Abstands der beiden Blechabschnitte 42 und 44 gegeneinander vorgenommen werden.

Fig. 5 zeigt einen Schnitt entlang der Linie A - B, die in Fig. 4 gestrichelt eingezeichnet ist. Neben der Lage der diversen Führungskulissen-Abschnitte ist zu erkennen, dass die beiden Distanzscheiben 30 und 32 über Schrauben 48 und Muttern 50 direkt mit dem Nockenrad 28 verbunden sind. Bei eventuellem Verschleiß können die Distanzscheiben 30 bzw. 32 daher auf einfache Weise gewechselt werden.

Die erfindungsgemäße Rollplanenanordnung 4 schafft somit eine zuverlässige Möglichkeit zur Abdeckung des Muldenkörpers 2, wobei aufgrund des spielbehafteten Führens während des Betriebs keine zusätzlichen Reibungskräfte auftreten können, die für zusätzlichen Verschleiß sorgen könnten.

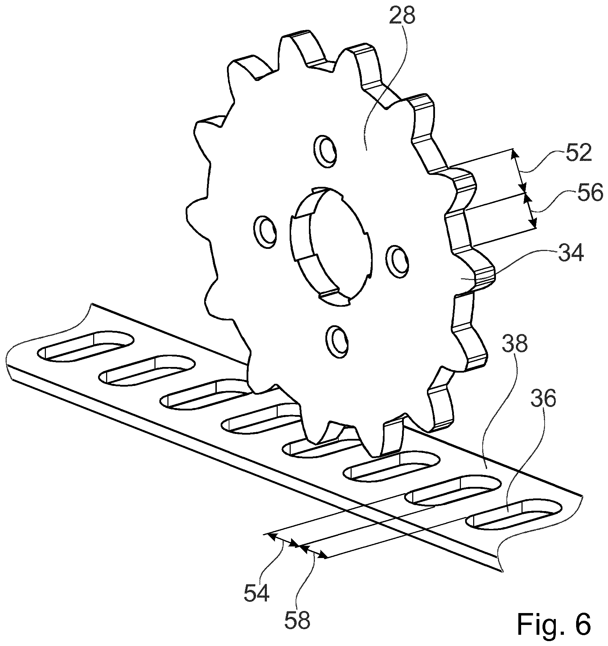

In Fig. 6 ist das Nockenrad 28 zusammen mit der Lochschiene 38 nochmals detailliert in einer perspektivischen Seitenansicht gezeigt. Zur besseren Darstellbarkeit ist hier das Nockenrad 28 so eingezeichnet, dass es nicht mehr mit den Löchern 36 der Lochschiene 38 kämmt. Man erkennt, dass ein erster Abstand 52, der eine Breite des Nocken 34 am unteren Ende benachbart zu Abrollflächen darstellt, so gewählt ist, dass er kleiner oder gleich einem zweiten Abstand 54 ist, der einer Öffnung des Loches 36 entlang der Abrollrichtung entspricht. Daher können die Nocken 34 in die Löcher 36 spielbehaftet geführt werden, wobei das Nockenrad 28 während des Abrollens in den Bereichen außerhalb der Nocken 34 zwischen den Löchern 36 zu liegen kommt. Dazu ist es vorgesehen, dass ein dritter Abstand 56, der dem Abstand zweier Nocken 34 und daher der Abrollstrecke entspricht, größer oder gleich einem vierten Abstand 58 ist, der dem Abstand der Löcher 36 zueinander entspricht.

Das Nockenrad 28 ist daher während des Auf- bzw. Abrollens der Rollplanenanordnung 4 jeweils durch Kraftbeaufschlagung an einem Nocken 34 in Bewegung zu versetzen. Hierzu ist lediglich ein kurzzeitiger Eingriff des Nockens 34 notwendig, wobei hier auch prinzipiell eine Ausgestaltung eines Nockenrads 28 in Frage käme, bei der anders geformte Erhebungen für ein Eingreifen in die Löcher 36 sorgen. Eine exakte Verzahnung wie bei einem Zahnradantrieb ist hierbei nicht notwendig.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Muldenkörper
- 4: Rollplanenanordnung
- 6: Führungseinrichtung
- 8: Wickelstange
- 10, 12: erste, zweite Längsseite
- 14: Stirnseite
- 16: Betätigungsmittel
- 18: Bordwand
- 20: Wickeleinrichtung
- 22: Schlitz
- 24: Führungsscheibe
- 26: Welle
- 28: Nockenrad
- 30, 32: erste, zweite Distanzscheibe
- 34: Nocken
- 36: Loch
- 38: Lochschiene
- 40: Führungskulisse
- 40': erster Führungskulissen-Abschnitt
- 40": zweiter Führungskulissen-Abschnitt
- 40'": dritter Führungskulissen-Abschnitt
- 40"": vierter Führungskulissen-Abschnitt
- 42, 44: erster, zweiter Blechabschnitt
- 46: Langloch
- 48: Schraube
- 50: Mutter

## Patentansprüche

1. Rollplanenanordnung für einen Muldenkörper (2) eines Nutzfahrzeugs, insbesondere eines Muldenkippers oder eines Sattelaufliegers, die eine Führungseinrichtung (6) und eine quer zu ihrer Längsrichtung bewegliche Wickelstange (8) zum Auf- und Abrollen einer Rollplane zwischen gegenüberliegenden Längsseiten (10, 12) des Muldenkörpers (2) aufweist, wobei die Wickelstange (8) auf einer Welle (26) eine Wickeleinrichtung (20) zur Aufnahme der Rollplane aufweist, wobei die Welle (26) an einer die Längsseiten (10, 12) verbindenden Stirnseite (14) über die Wickeleinrichtung (20) hinausragt und mit einem Nockenrad (28) versehen ist, **dadurch gekennzeichnet, dass** auf der Welle (26) zwei Distanzscheiben (30, 32) vorgesehen sind, die unmittelbar benachbart zum Nockenrad (28) und auf beiden Seiten des Nockenrads (28) angeordnet sind und dass das Nockenrad (28) in die entlang der Stirnseite (14) an dem Muldenkörper (2) angeordnete Führungseinrichtung (6) so kämmend eingreift, dass die Wickelstange (8), die beabstandet zum Nockenrad (28) auf der dem stirnseitigen Ende abgewandten Seite mit einer Führungsscheibe (24) versehen ist, entlang der Längsrichtung mit einem Axialspiel geführt ist und das Gewicht der Wickelstange (8) über das Nockenrad (28) auf der Führungseinrichtung (6) ruht, wobei die Führungseinrichtung (6) eine Lochschiene (38) aufweist, deren Löcher (36) mit Nocken (34) des Nockenrads (28) korrespondieren und entlang der Längsrichtung schlitzförmig ausgeführt sind.

2. Rollplanenanordnung nach Anspruch 1, bei der die Wickelstange (8) quer zur Längsrichtung zusätzlich mit einem Radialspiel geführt ist.

3. Rollplanenanordnung nach einem der Ansprüche 1 oder 2, bei der die Führungseinrichtung (6) eine Führungskulisse (40) aufweist.

4. Rollplanenanordnung nach Anspruch 3, bei der die Führungskulisse (40) zur Begrenzung des Axialspiels dient.

5. Rollplanenanordnung nach einem der Ansprüche 1 bis 4, bei der die Führungsscheibe (24) die Wickeleinrichtung (20) abschließt.

6. Rollplanenanordnung nach einem der Ansprüche 1 bis 5, bei der die Führungskulisse (40) zur Begrenzung einen Anschlag für die Führungsscheibe (24) und/oder Distanzscheiben (30, 32) schafft.

7. Rollplanenanordnung nach einem der Ansprüche 3 bis 6, bei der die Führungskulisse (40) zur Begrenzung des Radialspiels dient.

8. Rollplanenanordnung nach Anspruch 7, bei der die Führungskulisse (40) zur Begrenzung einen Anschlag für die Welle (26) der Wickelstange (8) schafft.

9. Rollplanenanordnung nach einem der Ansprüche 3 bis 8, bei der die Führungskulisse (40) aus mehrfach gebogenen Blechabschnitten (42, 44) geformt ist.

10. Rollplanenanordnung nach einem der Ansprüche 3 bis 9, bei der die Lochschiene (38) Teil der Führungskulisse (40) ist.

11. Rollplanenanordnung nach einem der Ansprüche 1 bis 10, bei der das dem stirnseitigen Ende gegenüberliegende Ende mit einem Betätigungsmittel (16) verbindbar ist, das das Auf- und Abrollen der Rollplane unterstützt.

12. Rollplanenanordnung nach einem der Ansprüche 1 bis 11, bei der ein erster Abstand (52) an einer Basis eines Nocken (34) kleiner oder gleich eines zweiten Abstands (54) eines Durchmessers des Lochs (36) und ein dritter Abstand (56) einer Abrollstrecke zwischen zwei Nocken (34) größer oder gleich einem vierten Abstand (58) der Löcher (36) zueinander gewählt sind.

## Claims

1. Roller tarpaulin arrangement for a bed body (2) of a commercial vehicle, in particular a dump truck or a semi-trailer, which has a guide device (6) and a winding rod (8) which is movable transversely to the longitudinal direction thereof for rolling up and unrolling a roller tarpaulin between opposite longitudinal sides (10, 12) of the bed body (2), the winding rod (8), on a shaft (26), having a winding device (20) for receiving the roller tarpaulin, the shaft (26) protruding beyond the winding device (20) on an end face (14) connecting the longitudinal sides (10, 12) and being provided with a cam wheel (28), **characterized in that** two spacer disks (30, 32) are provided on the shaft (26) which are arranged immediately adjacent to the cam wheel (28) and on both sides of the cam wheel (28) and **in that** the cam wheel (28) meshes with the guide device (6) arranged on the bed body (2) along the end face (14) such that the winding rod (8), which is provided with a guide disk (24) at a spacing from the cam wheel (28) on the side facing away from the end face, is guided in the longitudinal direction with axial play and the weight of the winding rod (8) rests on the guide device (6) via the cam wheel (28), the guide device (6) having a perforated rail (38), the holes (36) of which correspond to cams (34) of the cam wheel (28) and are slot-shaped in the longitudinal direction.

2. Roller tarpaulin arrangement according to claim 1, wherein the winding rod (8) is additionally guided with radial play transversely to the longitudinal direction.

3. Roller tarpaulin arrangement according to either claim 1 or claim 2, wherein the guide device (6) has a guide slot (40).

4. Roller tarpaulin arrangement according to claim 3, wherein the guide slot (40) serves to limit the axial play.

5. Roller tarpaulin arrangement according to any of claims 1 to 4, wherein the guide disk (24) closes off the winding device (20).

6. Roller tarpaulin arrangement according to any of claims 1 to 5, wherein the guide slot (40), for limiting, creates a stop for the guide disk (24) and/or spacer disks (30, 32).

7. Roller tarpaulin arrangement according to any of claims 3 to 6, wherein the guide slot (40) serves to limit the radial play.

8. Roller tarpaulin arrangement according to claim 7, wherein the guide slot (40), for limiting, creates a stop for the shaft (26) of the winding rod (8).

9. Roller tarpaulin arrangement according to any of claims 3 to 8, wherein the guide slot (40) is formed from sheet metal portions (42, 44) that have been bent several times.

10. Roller tarpaulin arrangement according to any of claims 3 to 9, wherein the perforated rail (38) is part of the guide slot (40).

11. Roller tarpaulin arrangement according to any of claims 1 to 10, wherein the end opposite the end face can be connected to an actuating means (16) which assists the rolling up and unrolling of the roller tarpaulin.

12. Roller tarpaulin arrangement according to any of claims 1 to 11, wherein a first distance (52) on a base of a cam (34) is selected to be less than or equal to a second distance (54) of a diameter of the hole (36) and a third distance (56) of a rolling path between two cams (34) is selected to be greater than or equal to a fourth distance (58) between the holes (36).

## Revendications

1. Agencement de bâche à rouleaux pour un corps en forme de benne (2) d'un véhicule utilitaire, en particulier d'un camion à benne basculante ou d'une semi-remorque, comportant un dispositif de guidage (6) et une tige de bobinage (8) mobile transversalement par rapport à sa direction longitudinale pour l'enroulement et le déroulement d'une bâche à rouleaux entre des côtés longitudinaux opposés (10, 12) du corps en forme de benne (2), la tige de bobinage (8) comportant un dispositif de bobinage (20) sur un arbre (26) pour la réception de la bâche à rouleaux, l'arbre (26) faisant saillie au-delà du dispositif de bobinage (20) sur une face frontale (14) reliant les côtés longitudinaux (10, 12), et étant pourvu d'une roue à came (28), **caractérisé en ce que** deux disques d'écartement (30, 32) sont prévus sur l'arbre (26), qui sont immédiatement adjacents à la roue à came (28) et sont agencés des deux côtés de la roue à came (28) et **en ce que** la roue à came (28) s'engrène avec le dispositif de guidage (6) agencé le long de la face frontale (14) sur le corps en forme de benne (2) de sorte que la tige de bobinage (8), laquelle est pourvue d'un disque de guidage (24) sur le côté opposé à l'extrémité frontale de façon espacée par rapport de la roue à came (28), est guidée le long de la direction longitudinale avec un jeu axial et que le poids de la tige de bobinage (8) repose sur le dispositif de guidage (6) par l'intermédiaire de la roue à came (28), le dispositif de guidage (6) comportant un rail perforé (38) dont les trous (36) correspondent aux cames (34) de la roue à came (28) et sont conçus en forme de fente le long de la direction longitudinale.

2. Agencement de bâche à rouleaux selon la revendication 1, la tige de bobinage (8) étant en outre guidée avec un jeu radial transversalement par rapport à la direction longitudinale.

3. Agencement de bâche à rouleaux selon l'une des revendications 1 ou 2, le dispositif de guidage (6) comportant une coulisse de guidage (40).

4. Agencement de bâche à rouleaux selon la revendication 3, la coulisse de guidage (40) servant à limiter le jeu axial.

5. Agencement de bâche à rouleaux selon l'une des revendications 1 à 4, le disque de guidage (24) fermant le dispositif de bobinage (20).

6. Agencement de bâche à rouleaux selon l'une des revendications 1 à 5, la coulisse de guidage (40) créant une butée pour le disque de guidage (24) et/ou les disques d'écartement (30, 32) pour la limitation.

7. Agencement de bâche à rouleaux selon l'une des revendications 3 à 6, la coulisse de guidage (40) servant à limiter le jeu radial.

8. Agencement de bâche à rouleaux selon la revendication 7, la coulisse de guidage (40) créant une butée pour l'arbre (26) de la tige de bobinage (8) pour la limitation.

9. Agencement de bâche à rouleaux selon l'une des revendications 3 à 8, la coulisse de guidage (40) étant formée de profilés en tôle (42, 44) courbés plusieurs fois.

10. Agencement de bâche à rouleaux selon l'une des revendications 3 à 9, le rail perforé (38) faisant partie de la coulisse de guidage (40).

11. Agencement de bâche à rouleaux selon l'une des revendications 1 à 10, l'extrémité opposée à l'extrémité frontale pouvant être reliée à un moyen d'actionnement (16) qui supporte l'enroulement et le déroulement de la bâche à rouleaux.

12. Agencement de bâche à rouleaux selon l'une des revendications 1 à 11, une première distance (52) sur une base d'une came (34), laquelle distance est inférieure ou égale à une deuxième distance (54) d'un diamètre du trou (36), et une troisième distance (56) d'un chemin de déroulement entre deux cames (34), laquelle est supérieure ou égale à une quatrième distance (58) des trous (36), étant choisies les unes par rapport aux autres.
